# EUROPÄISCHE PATENTANMELDUNG

(11) **EP 4 582 884 A1**
(43) Veröffentlichungstag der Anmeldung: **09.07.2025**
(21) Anmeldenummer: 24150225.1
(22) Anmeldetag: 03.01.2024
(51) Int. Cl.: G05B 13/02

(54) **VERFAHREN ZUM ERZEUGEN EINER BETRIEBSSTEUERUNG FÜR EINE MASCHINE MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Swazinna, Phillip, 85375 Neufahrn (DE); Udluft, Steffen, 82223 Eichenau (DE)
(74) Vertreter: Siemens Patent Attorneys

(57) **Zusammenfassung**

Die Erfindung betrifft ein Verfahren zum Erzeugen einer Betriebssteuerung (14) für eine Maschine (10) mittels einer elektronischen Recheneinrichtung (12), mit den Schritten: Bereitstellen eines neuronalen Netzwerks (18) mit zumindest einem veränderbaren Eingabeteil (20) und einem vorgegebenen Auswerteteil (22) mittels der elektronischen Recheneinrichtung (12); Erfassen von zumindest einem Zustandsparameter (24) für die Maschine (10) mittels einer Erfassungseinrichtung (16) der elektronischen Recheneinrichtung (12); Adaptieren des veränderbaren Eingabeteils (20) in Abhängigkeit von dem zumindest einen erfassten Zustandsparameter (24) mittels der elektronischen Recheneinrichtung (12); Übertragen von zumindest einem Ausgabewert (26) des adaptierten veränderbaren Eingabeteils (20) an den vorgegebenen Auswerteteil (22); und Erzeugen der Betriebssteuerung (14) durch Auswerten des zumindest einen Ausgabewerts (26) mittels des vorgegebenen Auswerteteils (22). Ferner betrifft die Erfindung ein Computerprogrammprodukt, ein computerlesbares Speichermedium sowie eine elektronische Recheneinrichtung (12).

## Beschreibung

Die nachfolgende Erfindung betrifft ein Verfahren zum Erzeugen einer Betriebssteuerung für eine Maschine mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Basismodelle wie ChatGPT haben die Vorteile von entsprechenden Modellen demonstriert, die auf riesigen Datenmengen trainiert wurden und dann für viele nachgelagerte Aufgaben wie Fragebeantwortung, Codegenerierung, Textzusammenfassung, Klassifizierung oder Generierung verwendet werden können.

Ferner ist im Stand der Technik bekannt, dass solche Ansätze auch einen effizienten Transfer im Rahmen des Reinforcement Learning ermöglichen. Dabei trainieren diese ein einziges Aktionswertfunktionsmodell mit einem Wertkopf für jede der Aufgaben, die sie beim Training berücksichtigen. Die Eingabe- und versteckten Schichten bis hin zur Ausgabeschicht der Wertfunktion werden jedoch über alle Aufgaben hinweg geteilt und ermöglichen das Lernen einer nützlichen Repräsentation für viele Aufgaben. Es ist gezeigt, dass man mit dieser Wertfunktion Strategien mit besserer Leistung für neue, unbekannte Aufgaben trainieren kann, indem man einen neuen Wertkopf hinzufügt und die Parameter auf den neuen Daten fein abstimmt, als wenn man eine völlig neue Wertfunktion nur für die neue Aufgabe von Grund auf trainieren würde.

Ferner wurden Basismodelle vor allem bei der Verarbeitung natürlicher Sprache oder bei Computer-Vision-Aufgaben eingesetzt, da die Eingabedomänen in diesen Bereichen in der Regel für alle Aufgaben gleich sind. Eine Lösung für die Integration heterogener Zustandsbeobachtungsarten ist nicht bekannt. Eine Alternativlösung besteht daher darin, für jede Aufgabe ein eigenes Modell zu trainieren.

Aufgabe der vorliegenden Erfindung ist es, ein Verfahren, ein Computerprogrammprodukt, ein computerlesbares Speichermedium sowie eine elektronische Recheneinrichtung zu schaffen, welche vorteilhaft für unterschiedliche Maschinen eingesetzt werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Erzeugen einer Betriebssteuerung für eine Maschine mittels einer elektronischen Recheneinrichtung. Es wird ein neuronales Netzwerk mit zumindest einem veränderbaren Eingabeteil und einem vorgegebenen Auswerteteil mittels der elektronischen Recheneinrichtung bereitgestellt. Es erfolgt das Erfassen eines Zustandsparameters für die Maschine mittels einer Erfassungseinrichtung der elektronischen Recheneinrichtung. Es wird eine Möglichkeit zur Adaption des veränderbaren Eingabeteils in Abhängigkeit von dem erfassten Zustandsparameter mittels der elektronischen Recheneinrichtung bereitgestellt. Es wird zumindest ein Ausgabewert des adaptierten veränderbaren Eingabeteils an den vorgegebenen Auswerteteil übergeben und es erfolgt das Erzeugen der Betriebssteuerung durch Auswerten des zumindest einen Ausgabewerts mittels des vorgegebenen Auswerteteils.

Insbesondere kann somit in einer ersten Ausführungsform der veränderbare Eingabeteil in Abhängigkeit von dem Zustandsparameter adaptiert werden. Alternativ kann ein autoregressives Modell bereitgestellt werden, welches auch ohne Anpassung für die Maschine nutzbar ist.

Somit kann ein bereits im Wesentlichen trainiertes neuronales Netzwerk, insbesondere bezüglich des vorgegebenen Auswerteteils, genutzt werden, um bereits eine Betriebssteuerung für eine Maschine durchzuführen. Somit kann ein aufwendiges Anlernen eines gesamtheitlichen neuronalen Netzwerks entfallen. Lediglich der Eingabeteil ist veränderbar und muss entsprechend angepasst werden. Dabei spielt insbesondere eine große Rolle, dass sich beispielsweise unterschiedliche Maschinen auch unterscheiden, weshalb der veränderbare Eingabeteil entsprechend adaptiert werden kann. Der vorgegebene Eingabeteil nutzt dabei bereits angelernte Schichten, wodurch eine einfache Betriebssteuerung ermöglicht ist.

Insbesondere können somit Übergangsmodelle im Rahmen von Basismodellen für das Verstärkungslernen (Reinforcement Learning) verwendet werden. Des Weiteren kann eine Lösung zur Integration verschiedener Umgebungen mit Beobachtungen unterschiedlicher Dimensionalität, um Modelle für heterogene Umgebungen zu trainieren, realisiert werden. Ferner kann die Hinzufügung von Beobachtungsarten realisiert werden, um das Lernen besser einzubetten.

Insbesondere beschreibt somit die Erfindung ein neuartiges Verfahren zur Integration heterogener Zustandsbeobachtungstypen als Eingaben in ein einziges neuronales Netzwerk, beziehungsweise ein einziges Modell, sowie die Nutzung der besseren Stabilität und Dateneffizienz, die Übergangsmodelle gegenüber Wertfunktionen im Zusammenhang mit Basismodellen zugeschrieben wird.

Anstelle einer mehrköpfigen Aktionswertfunktion, wie sie im Stand der Technik zur Vorhersage der Erträge einer Strategie vorgeschlagen wird, kann ein Übergangsmodell M trainiert werden, das sowohl die Einzelschritterträge als auch die nächsten Zustände auf der Grundlage von Aktionen und vergangenen Zuständen vorhersagt (s',r) = M(s,a). Wenn die Zustandsbeobachtungen aus Bildern oder anderen sehr hoch dimensionalen Merkmalen bestehen, können die Einträge mithilfe latenter Repräsentationen vorhergesagt werden. Da die Verkettung [s,a] für jede Aufgabe potentiell eine andere Dimensionalität aufweist, muss diese in einer Repräsentation fester Größen eingebettet werden.

Als Zustandsparameter der Maschine können beispielsweise Drücke, Temperaturen, Ventilstellungen, Spannungen, Ströme und dergleichen angesehen werden.

Hierzu werden nachfolgend zwei unterschiedliche Methoden vorgeschlagen.

Gemäß einer vorteilhaften Ausgestaltungform wird auf Basis der erzeugten Betriebssteuerung die Maschine gesteuert. Insbesondere kann somit zumindest ein Steuersignal von der elektronischen Recheneinrichtung erzeugt werden, welches dann die Maschine entsprechend auch steuert. Beispielsweise kann die Maschine als Herstellungsmaschine bereitgestellt werden, um beispielsweise ein Produkt herzustellen. Auf Basis des Steuersignals beziehungsweise der Steuersignale kann nun ein effizientes Herstellen des Produkts realisiert werden.

Eine weitere vorteilhafte Ausgestaltungsform sieht vor, dass der veränderbare Eingabeteil als einzelne Eingabeschicht bereitgestellt wird. Insbesondere kann die Schicht beispielsweise ein Neuron aufweisen, welches eine vorgegebene Gewichtung aufweist. Der Zustandsparameter wird dann in die Eingabeschicht eingegeben und entsprechend verarbeitet und an die vorgegebene, insbesondere nicht veränderbare Auswerteschicht übergeben. Somit kann auf Basis der einzelnen veränderbaren Eingabeschicht und der vorgegebenen Auswerteschicht eine entsprechende Betriebssteuerung erzeugt werden.

Ferner hat es sich als vorteilhaft erwiesen, wenn die einzelne Eingabeschicht mit einer Vielzahl von Neuronen bereitgestellt wird, wobei einem jedem Neuron der zumindest eine Zustandsparameter übergeben wird. Insbesondere kann somit eine Vielzahl von Zustandsparametern für die Maschine erfasst werden, welche dann wiederum in einzelne Neuronen der Eingabeschicht eingegeben werden. Somit kann eine Betriebssteuerung mithilfe von unterschiedlichen erfassten Zustandsparametern realisiert werden.

Insbesondere kann somit für jede Aufgabe eine andere Einbettungsschicht bereitgestellt werden- wenn neue Aufgaben erlernt werden, müssen eine oder mehrere neue Einbettungsschichten von Grund auf neu erlernt werden, ähnlich wie bei den Schichten zur Vorhersage des endgültigen Ertrags des Zustands oder der Schicht zur Vorhersage des Ertrags gemäß dem Stand der Technik.

In einer weiteren vorteilhaften Ausgestaltungsform ist vorgesehen, dass der veränderbare Eingabeteil zumindest zwei aufeinanderfolgende Eingabeschichten aufweist. Eine jeweilige Eingabeschicht kann dann beispielsweise ein Neuron aufweisen. Diese werden dann verkettet in der Eingabeschicht bereitgestellt, und bei dem letzten Neuron der Eingabeschicht beziehungsweise der letzten Eingabeschicht kann dann wiederum der Auswerteparameter an den Auswerteteil übergeben werden.

Ferner kann vorgesehen sein, dass die Eingabeschicht zumindest ein Neuron aufweist, wobei ein erfasster Zustandsparameter nach einer Auswertung als Ausgabewert wieder als Eingabewert für das Neuron zur Verfügung gestellt wird. Insbesondere kann somit auch eine Vielzahl von unterschiedlichen Zustandsparametern von einem Neuron berechnet werden. Im Wesentlichen wird somit der Ausgabewert rückpropagiert. Somit kann eine Vielzahl von Zustandsparametern auch in der Eingabeschicht mit einem Neuron bearbeitet werden. Dadurch kann eine Maschine mit vielen erfassbaren Zustandsparametern entsprechend gesteuert werden.

Insbesondere ist somit ein autoregressives Einbettungsmodell vorgeschlagen, um eine Einbettung zu erzeugen, und es wird für alle Aufgaben verwendet. Die einzelnen Dimensionen i=0, ..., N der Zustandsbeobachtung sᵢ werden zusammen mit der aktuellen Einbettung e einzeln in das Einbettungsmodell eingespeist, und zwar iterativ, bis eine endgültige Einbettung erzeugt wird: eᵢ=M(sᵢ, eᵢ₋₁), wobei M() das Einbettungsmodell ist.

Weiterhin vorteilhaft ist, wenn der Ausgabeparameter iterativ für die aufeinanderfolgenden Eingabeschichten erzeugt wird. Insbesondere kann somit vorgesehen sein, dass der Ausgabeparameter iterativ auf unterschiedliche Zustandsparameter hin als Eingabeparameter innerhalb der Eingabeschichten erzeugt wird. Somit kann ein zuverlässiges Modell für die Betriebssteuerung realisiert werden.

Eine weitere vorteilhafte Ausgestaltungsform sieht vor, dass der vorgegebene Auswerteteil auf Basis anderer Maschinen erzeugt und vorgegeben wird. Insbesondere können somit neuronale Netzwerke verwendet werden, welche schon bei anderen Maschinen, insbesondere in der Vergangenheit, entsprechend verwendet werden. Somit kann ein vorgegebener Auswerteteil bereitgestellt werden, welcher bereits bei anderen Maschinen zuverlässig getestet wurde. Damit kann die Anlernphase zeitlich reduziert sowie eine verbesserte Betriebssteuerung realisiert werden.

Es hat sich weiterhin als vorteilhaft erwiesen, wenn der vorgegebene Auswerteteil auf Basis ähnlicher Maschinen erzeugt und vorgegeben wird. Insbesondere sind die Maschinen entsprechend ähnlich. Diese können sich jedoch auch in Teilen unterscheiden. Die Unterschiede können entsprechend bewertet beziehungsweise vorgegeben werden, sodass das neuronale Netzwerk entsprechend über die Ähnlichkeiten beziehungsweise Unterschiede in Kenntnis gesetzt ist. Somit können beispielsweise Zustandsparameter, welche bei allen anderen Maschinen nicht vorkommen, zusätzlich mit in die Eingabeschicht aufgenommen werden und entsprechend angelernt werden. Somit kann auf Basis von ähnlichen Maschinen eine Art Basismodell für die Maschine selbst bereitgestellt werden.

Ebenfalls vorteilhaft ist, wenn in dem veränderlichen Eingabeteil ein Parametertyp des Zustandsparameters berücksichtigt wird. Beispielsweise kann vorgesehen sein, dass die Zustandsdimension um den entsprechenden Typ erweitert wird. Insbesondere, da die entsprechenden Modelle normalerweise für eine feste Eingabedarstellung gelernt werden und die Zustandsdimensionen ihre Bedeutung nicht ändern, werden die Modelle die Möglichkeit haben, die Bedeutung der beobachteten Variablen zu identifizieren, das heißt ihre physikalische Größe, wie beispielsweise Geschwindigkeit, Winkel oder Temperatur. Die Typen werden zusammen mit tatsächlichen Werten an die Einbettungsmodelle weitergegeben.

Ferner hat es sich als vorteilhaft erwiesen, wenn in Abhängigkeit von der erzeugten Betriebsstrategie zumindest ein Maschinenparameter erfasst wird und der Maschinenparameter an das neuronale Netzwerk übermittelt wird und eine Anpassung des neuronalen Netzwerks auf Basis des Maschinenparameters durchgeführt wird. Insbesondere kann somit eine Art Rückpropagation durchgeführt werden. Die Betriebsstrategie kann somit in einem Initialzustand für die Maschine bereitgestellt werden. Es können dann die tatsächlichen Zustandsparameter der Maschine entsprechend erfasst werden und eine Anpassung des neuronalen Netzwerks auf Basis der tatsächlichen Maschine realisiert werden. Somit kann das neuronale Netzwerk auf Basis der tatsächlichen Maschine angelernt werden, wodurch die Betriebsstrategie entsprechend adaptiert werden kann.

Ebenfalls vorteilhaft ist, wenn in der veränderbaren Eingabeschicht Gewichte adaptiert werden. Insbesondere können auf Basis des erfassten Zustandsparameters die Gewichte entsprechend adaptiert werden. Somit kann eine Anpassung der Eingabeschicht auf einfache Art und Weise durchgeführt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft daher auch ein computerlesbares Speichermedium mit zumindest dem Computerprogrammprodukt.

Weiterhin betrifft die Erfindung eine elektronische Recheneinrichtung zum Erzeugen einer Betriebssteuerung für eine Maschine, mit zumindest einer Erfassungseinrichtung und einem neuronalen Netzwerk, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Weiterhin betrifft die Erfindung auch eine Maschine mit einer elektronischen Recheneinrichtung nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, der elektronischen Recheneinrichtung sowie der Maschine anzusehen. Die elektronische Recheneinrichtung sowie die Maschine weisen hierzu gegenständliche Merkmale auf, um entsprechende Verfahrensschritte durchführen zu können.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebene Kategorie für eine Klassifizierungsaufgabe, einen oder mehrere prädizierte Werte oder eine prädizierte Sequenz beinhalten kann.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: ein schematisches Blockschaltbild einer ersten Ausführungsform einer elektronischen Recheneinrichtung; und
- FIG 2: ein weiteres schematisches Blockschaltbild gemäß einer Ausführungsform einer Maschine mit einer elektronischen Recheneinrichtung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

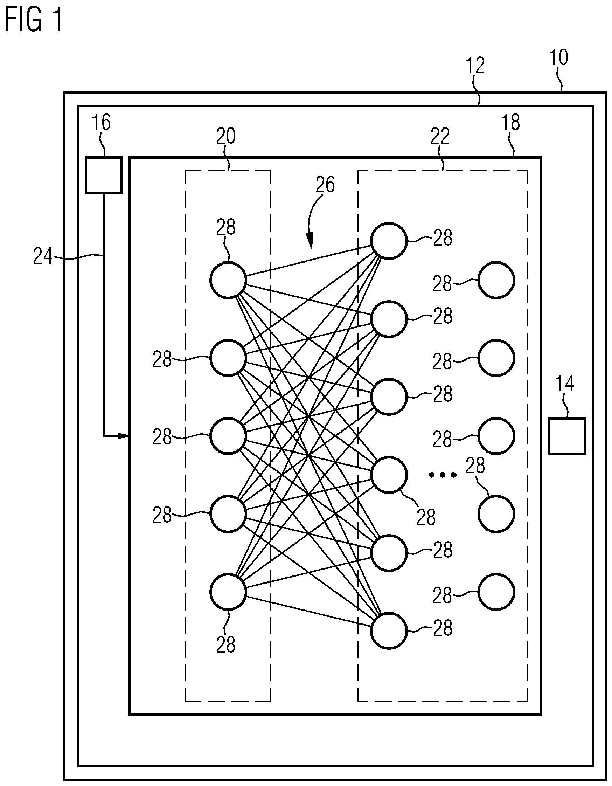

FIG 1 zeigt ein schematisches Blockschaltbild gemäß einer Ausführungsform einer Maschine 10 mit einer Ausführungsform einer elektronischen Recheneinrichtung 12. Die elektronische Recheneinrichtung 12 ist zum Erzeugen einer Betriebsstrategie 14 für die Maschine 10 ausgebildet. Die elektronische Recheneinrichtung 12 weist hierzu zumindest eine Erfassungseinrichtung 16 und ein neuronales Netzwerk 18 auf.

Beim erfindungsgemäßen Verfahren ist insbesondere vorgesehen, dass das neuronale Netzwerk 18 mit zumindest einem veränderbaren Teil 20 und einem vorgegebenen Auswerteteil 22 bereitgestellt wird. Es erfolgt das Erfassen eines Zustandsparameters 24 für die Maschine 10 mittels der Erfassungseinrichtung 16. Der veränderbare Eingabeteil 20 wird in Abhängigkeit von dem erfassten Zustandsparameter 24 mittels der elektronischen Recheneinrichtung 12 adaptiert. Es erfolgt das Übertragen von zumindest einem Ausgabewert 26 des adaptierten veränderbaren Eingabeteils 20 an den vorgegebenen Auswerteteil 18. Es erfolgt dann das Erzeugen der Betriebssteuerung 14 durch Auswerten des zumindest einen Ausgabewerts 26 mittels des vorgegebenen Auswerteteils 18.

Dabei kann insbesondere vorgesehen sein, dass auf Basis der erzeugten Betriebssteuerung 14 die Maschine 10 gesteuert wird.

Ferner zeigt die FIG 1 insbesondere, dass der veränderbare Eingabeteil 20 als einzelne Eingabeschicht bereitgestellt wird. Hierbei kann vorgesehen sein, dass die einzelne Eingabeschicht mit einer Vielzahl von Neuronen 28 bereitgestellt wird, wobei einem jeden Neuron 28 ein erfasster Zustandsparameter 24 zugeordnet wird.

Insbesondere kann dabei vorgesehen sein, dass der vorgegebene Auswerteteil 18 auf Basis anderer Maschinen erzeugt und vorgegeben wird. Ferner kann der vorgegebene Auswerteteil 18 auf Basis ähnlicher Maschinen erzeugt und vorgegeben werden.

Eine weitere vorteilhafte Ausgestaltungsform sieht vor, dass in dem veränderlichen Eingabeteil 20 ein Parametertyp des Zustandsparameters 24 berücksichtigt wird. Insbesondere kann nämlich vorgesehen sein, dass die Zustandsdimension um den Parametertyp erweitert wird.

Insbesondere, da die neuronalen Netzwerke 18 normalerweise für eine feste Eingabedarstellung gelernt werden und die Zustandsdimension ihre Bedeutung nicht verändern, wird dem neuronalen Netzwerk 18 die Möglichkeit gegeben, die Bedeutung der beobachteten Variablen zu identifizieren, das heißt beispielsweise ihre physikalische Größe, wie zum Beispiel Geschwindigkeit, Winkel und Temperatur. Die Typen werden zusammen mit den tatsächlichen Werten an die Einbettungsmodelle beziehungsweise die veränderbare Eingabeschicht 20 weitergegeben.

Des Weiteren kann vorgesehen sein, dass in Abhängigkeit von der erzeugten Betriebsstrategie zumindest ein Maschinenparameter erfasst wird und der Maschinenparameter an das neuronale Netzwerk 18 übermittelt wird und eine Anpassung des neuronalen Netzwerks 18 auf Basis des Maschinenparameters durchgeführt wird.

Ferner können in der veränderbaren Eingabeschicht 20 Gewichte adaptiert werden.

Insgesamt zeigt somit die FIG 1 ein Verfahren zur Integration heterogener Zustandsbeobachtungstypen als Eingaben in ein einziges Modell beziehungsweise das neuronale Netzwerk 18 sowie Nutzung der besseren Stabilität und Dateneffizienz, die das Übergangsmodell gegenüber Wertfunktionen im Zusammenhang mit Basismodelle (foundation model) zugeschrieben wird. Anstelle einer mehrköpfigen Aktionswertfunktion zur Vorhersagen wie sie im Stand der Technik vorgeschlagen wird, wird nun das Übergangsmodell M trainiert wird, dass sowohl die Einzelschritterträge als auch die nächsten Zustände auf der Grundlage von Aktionen und vergangenen Zuständen vorhersagt: (s`,r)=M(a,A). Da die Zustandsbeobachtungen aus Bildern oder anderen sehr hochdimensionalen Merkmalen bestehen, können die Erträge mithilfe latenter Repräsentationen vorhergesagt werden. Da die Verkettung [s,a] für jede Aufgabe potentiell eine andere Dimensionalität aufweist, muss diese in eine Repräsentation fester Größe eingebettet werden. Zu diesem Zweck wird in der FIG 1 vorgeschlagen, dass für jede Aufgabe eine andere Einbettungsschicht erlernt wird - wenn neue Aufgaben erlernt werden müssen, muss eine oder mehrere neue Einbettungsschichten von Grund auf neu erlernt werden, ähnlich wie bei den Schichten zur Vorhersage des endgültigen Ertrags und des Zustands oder der Schicht zur Vorhersage des Ertrags gemäß dem Stand der Technik.

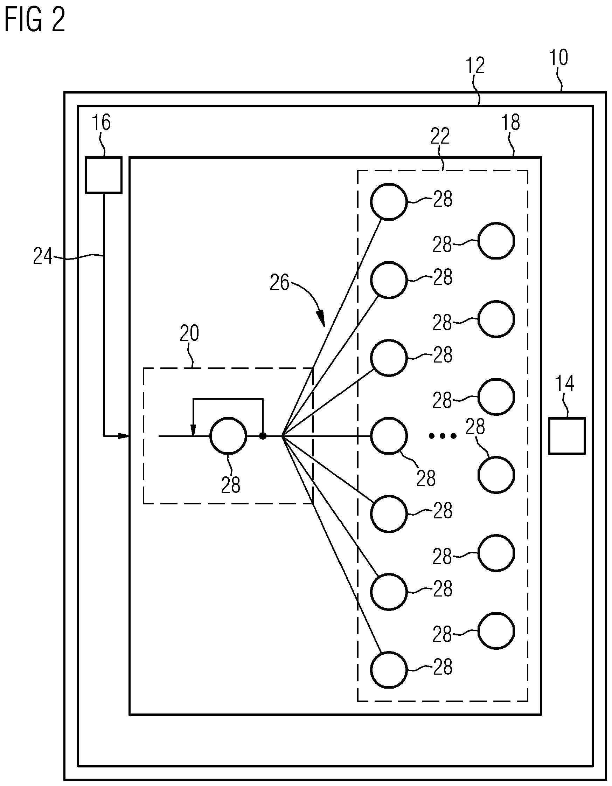

FIG 2 zeigt ein weiteres schematisches Blockschaltbild gemäß einer weiteren Ausführungsform der Maschine 10 mit der elektronischen Recheneinrichtung 12. In der FIG 2 ist insbesondere gezeigt, dass der veränderbare Eingabeteil 20 nur ein Neuron 28 aufweist und der Ausgabewert 26 wiederum als neue Eingabe in einem neuen Berechnungsschritt übergeben wird.

Insbesondere zeigt somit die FIG 2 ein autoregressives Einbettungsmodell, das erlernt wird, um eine Einbettung zu erzeugen, und es wird für alle Aufgaben verwendet: Die Einzeldimension i=0,..., N der Zustandsbeobachtung sᵢ werden zusammen mit der aktuellen Einbettung e einzeln in das Einbettungsmodell eingespeist, und zwar iterativ, bis eine endgültige Einbettung erzeugt wird: eᵢ=M(sᵢ, eᵢ₋₁), wobei M() das Einbettungsmodell ist.

### Bezugszeichenliste / List of Reference

- 10: Maschine
- 12: elektronische Recheneinrichtung
- 14: Betriebssteuerung
- 16: Erfassungseinrichtung
- 18: neuronales Netzwerk
- 20: veränderbarer Eingabeteil
- 22: vorgegebener Auswerteteil
- 24: Parameter
- 26: Ausgabewert
- 28: Neuron

## Patentansprüche

1. Verfahren zum Erzeugen einer Betriebssteuerung (14) für eine Maschine (10) mittels einer elektronischen Recheneinrichtung (12), mit den Schritten:
- Bereitstellen eines neuronalen Netzwerks (18) mit zumindest einem veränderbaren Eingabeteil (20) und einem vorgegebenen Auswerteteil (22) mittels der elektronischen Recheneinrichtung (12);
- Erfassen von zumindest einem Zustandsparameter (24) für die Maschine (10) mittels einer Erfassungseinrichtung (16) der elektronischen Recheneinrichtung (12);
- Bereitstellen einer Adaptionsmöglichkeit des veränderbaren Eingabeteils (20) in Abhängigkeit von dem zumindest einen erfassten Zustandsparameter (24) mittels der elektronischen Recheneinrichtung (12);
- Übertragen von zumindest einem Ausgabewert (26) des adaptierbaren veränderbaren Eingabeteils (20) an den vorgegebenen Auswerteteil (22); und
- Erzeugen der Betriebssteuerung (14) durch Auswerten des zumindest einen Ausgabewerts (26) mittels des vorgegebenen Auswerteteils (22).

2. Verfahren nach Anspruch 1, **dadurch gekennzeichnet, dass**
auf Basis der erzeugten Betriebssteuerung (14) die Maschine (10) gesteuert wird.

3. Verfahren nach Anspruch 1 oder 2, **dadurch gekennzeichnet, dass**
der veränderbare Eingabeteil (20) als einzelne Eingabeschicht bereitgestellt wird.

4. Verfahren nach Anspruch 3, **dadurch gekennzeichnet, dass**
die einzelne Eingabeschicht mit einer Vielzahl von Neuronen (28) bereitgestellt wird, wobei einem jedem Neuron (28) der zumindest eine Zustandsparameter (24) übergeben wird.

5. Verfahren nach einem der Ansprüche 1 oder 2, **dadurch gekennzeichnet, dass** der veränderbare Eingabeteil (20) durch zumindest zwei aufeinanderfolgende Eingabeschichten bereitgestellt wird.

6. Verfahren nach einem der vorhergehenden Ansprüche, **dadurch gekennzeichnet, dass** die Eingabeschicht zumindest ein Neuron (28) aufweist, wobei ein erfasster Zustandsparameter (24) nach einer Auswertung als Ausgabewert (26) wieder als Eingabewert für das Neuron zur Verfügung gestellt wird.

7. Verfahren nach einem der vorhergehenden Ansprüche, **dadurch gekennzeichnet, dass** der vorgegebene Auswerteteil (22) auf Basis anderer Maschinen erzeugt und vorgegeben wird.

8. Verfahren nach einem der vorhergehenden Ansprüche, **dadurch gekennzeichnet, dass** der vorgegebene Auswerteteil (22) auf Basis ähnlicher Maschinen erzeugt und vorgegeben wird.

9. Verfahren nach einem der vorhergehenden Ansprüche, **dadurch gekennzeichnet, dass** in dem veränderlichen Eingabeteil (20) ein Parametertyp des zumindest einen Zustandsparameters (24) berücksichtigt wird.

10. Verfahren nach einem der vorhergehenden Ansprüche, **dadurch gekennzeichnet, dass** in Abhängigkeit von der erzeugten Betriebssteuerung (14) zumindest ein Maschinenparameter erfasst wird und der Maschinenparameter an das neuronale Netzwerk (18) übermittelt wird und eine Anpassung des neuronalen Netzwerks (18) auf Basis des Maschinenparameters durchgeführt wird.

11. Verfahren nach einem der vorhergehenden Ansprüche, **dadurch gekennzeichnet, dass** in der veränderbaren Eingabeschicht (20) Gewichte adaptiert werden.

12. Computerprogrammprodukt mit Programmcodemitteln, welche eine elektronische Recheneinrichtung (12) dazu veranlassen, wenn die Programmcodemittel von der elektronischen Recheneinrichtung (12) abgearbeitet werden, ein Verfahren nach einem der Ansprüche 1 bis 11 durchzuführen.

13. Computerlesbares Speichermedium mit zumindest einem Computerprogrammproduckt nach Anspruch 12.

14. Elektronische Recheneinrichtung (12) zum Erzeugen einer Betriebssteuerung (14) für eine Maschine (10), mit zumindest einer Erfassungseinrichtung (16) und einem neuronalen Netzwerk (18), wobei die elektronische Recheneinrichtung (12) zum Durchführen eines Verfahrens nach einem der Ansprüche 1 bis 11 ausgebildet ist.
